Europäisches Patentamt

(19) European Patent Office

Office européen des brevets

(11) Publication number: 0 142 407
A1

(12) EUROPEAN PATENT APPLICATION

(21) Application number: 84402021.4

(22) Date of filing: 08.10.84

(51) Int. Cl.⁴: C 09 K 7/02
E 21 B 33/138, E 21 B 21/00

(30) Priority: 17.10.83 FR 8316487

(43) Date of publication of application:
22.05.85 Bulletin 85/21

(84) Designated Contracting States:
DE GB IT NL

(71) Applicant: Etudes et Fabrication Dowell Schlumberger
Z.I. Molina BP 90
F-42003 Saint-Etienne Cedex(FR)

(72) Inventor: Davidson, Colin J.
2 rue de Moutier
F-42000 Saint-Etienne Cedex(FR)

(72) Inventor: Mentzer, Eric
C/O Cyanamid B.V. P.O.Box 1523
NL-3000 BM Rotterdam(NL)

(74) Representative: Richebourg, Michel François
Etudes et Fabrication Dowell Schlumberger Z.I. Molina
La Chazotte B.P. 90
F-42003 Saint-Etienne Cédex(FR)

(54) Method to delay gelation of polymers, controlled gelation compositions containing said polymers, and particular application to the treatment of oil wells.

(57) A method has been discovered to delay the onset of gelation of partially hydrolysed polyacrylamides using polyphosphonate additives in the presence of a hexavalent chromium compound and a reducing agent. The preferred reducing agents are thiourea and sodium sulfite. By altering the temperature, pH and solution composition, high delays in gelation have been observed.

EP 0 142 407 A1

METHOD TO DELAY GELATION OF POLYMERS, CONTROLLED
GELATION COMPOSITIONS CONTAINING SAID POLYMERS, AND
PARTICULAR APPLICATION TO THE TREATEMENT OF OIL WELLS

The present invention is related to the field of gelled polymers, and of compositions to obtain such polymers, to be injected into oil wells.

When procuding hydrocarbons from a subterranean hydrocarbon bearing formation it is often desirable to reduce the permeability of preselected zones of the formation. In general this is necessary either because these zones consume too high a quantity of fluid, (as for example thief zones during drilling or cementing operations, or zones taking in most of the injected fluid in the case of assisted recovery), or because these zones produce too much unwanted fluid, water for example.

One technique permitting the reduction of the permeability of selected zones is the use of gelled polymer solutions. One of the problems often encountered in utilising gelable solutions of polymeric material in porous medium is the placement of the very highly viscous gel within the porous structure. Difficulties are encountered both in pumping such a gel (because of the high friction forces) and in introducing it into the porous matrix (because of the high pressure which develops and of the possible irreversible degradation due to shearing stresses). One possible solution is to delay the onset of gelation of the polymer solution such that it enters the formation rock as a very thin fluid insensitive to shearing stresses and once placed in the desirable zone forms a gel in situ.

To obtain a polymeric gel in aqueous solution it is necessary to have the polymer hydrated, (i.e. extension of the polymer chains by interaction with water) in the presence of a system capable of releasing a crosslinking agent. The crosslinking agent then bonds adjacent macromolecules together to build a three-dimensional network resulting in a very highly viscous gel.

The crosslinking reaction in which we are interested involves the production of multivalent metallic ions from precursors by reaction with suitable activators. A typical precursor might be sodium dichromate which can react with a suitable activator e.g. sodium dithionite to produce trivalent chromium ions. These trivalent chromium ions are capable of inter-acting with, for example polymer carboxylic groups linking adjacent macromolecules together and are thus crosslinking agents.

The polymers which are sensitive to such a reaction are those capable of interacting with the crosslinking agent to form a polymeric gel. These include polymers containing anionic groups within their structure, particularly carboxylic acid groups (or salts of said acid groups), for example acrylic polymers, carboxy-cellulose derivatives, and other polysaccharides, Xanthan gum, etc.

Such crosslinking reactions involving anionic polymers and a precursor/activator crosslinking system are well known and delays in the gelation process have been obtained previously in two different ways. First, it has been found that certain activators will react more slowly with a given precursor (under certain reaction conditions) than others.

For example, at low temperatures and high pH's the production of crosslinking trivalent chromium ions from dichromate ions will occur much more rapidly when using sodium dithionite as activator than, for example, when using sodium thiosulfate as activator.

A second method of delaying gelation with this type of system consists of including in the solution substances capable of interacting with the trivalent crosslinking ions. In this manner, a competition is set up between the interaction of the crosslinking agent with the polymer groups (leading to gel formation) and the interaction of the crosslinking groups with the added substance (this creating a delay in the gelation). U.S. patent no. 3,926,258, for example, uses a polymer crosslinking agent mixture of the above type, in the presence of complexing agents such as citric acid and obtains delays in gelation of up to one hour.

United States Patent 3 926 258 describes a method of obtaining the delayed gelation of carboxy polymers using a dichromate as preferred precursor and a bisulfite as preferred activator in the presence of citric acid as preferred complexing agent. Delays of up to one hour are thus reached according to said document, when using the complexing agent and crosslinking agent in approximately 1:1 ratio (0.013 M citric acid : 0.0096 M $Cr^{3+}$ ions).

No mention is made in said document of using polyphosphonic acids or their salts as complexing agents nor of thiourea or thiones (mentioned hereinafter) as preferred reducing agent.

The delay obtained with the aforesaid method is extremely short (up o one hour) whereas according to the invention, as will be seen hereinafter, a delay of several weeks or more can be reached. It will also be noted hereinafter that the ratio of polyphosphonate : chromium (III) in the system according to the invention is much less than 1.1 (1 : 40) and of a much lower concentration ($10^{-4}$ M polyphosphonate :
0.004 M $Cr^{3+}$).

Said ratio obviously varies in relation to a number of parameters, including the required delay in gelation. For example, to increase the delay in gelation, the ratio in question can be brought down to 1:30. It will not be necessary to dwell on this particular point in the present application. However, the example of 1:40 ratio of polyphosphonate/chromium III according to the invention suggests that a mechanism other than a sequestering mechanism is operative. Normally, a ratio of 1 : 1 such as described in the aforesaid patent is the minimum for complexation and it is often necessary to add a greater amount of complexing agent than there are metallic ions.

Furthermore, US patent 3,926,258 makes no reference whatsoever to the temperature at which the gelation reaction occurs and it must be assumed that ambient temperatures prevailed. The system according to this invention on the contrary, is specifically designed to operate at high temperatures although it may be modified for use at lower temperatures.

It will also be noted that the aforesaid patent makes no mention of the pH, whereas according to the invention, this is an essential parameter.

U.S. patents 3,899,293 and 3,971,734 describe a method of stabilizing sulfite or bisulfite solutions in contact with the atmosphere by slowing down their reaction with oxygen. This is done by using polyphosphonate additives. Sulfites and bisulfites are reducing agents and react with atmosphere oxygen in a reduction reaction.The mechanism corresponding to this reaction is not comparable to the mechanism implied in the present invention.

The present invention relates to a new class of agents capable of delaying gelation of appropriate polymers by metallic ions.

These new agents (or "inhibitors") are selected, according to the invention, from any compound capable of inhibiting the reaction between the selected precursor of crosslinking agent (see hereafter) and the reducing agent (activator, see hereafter), thus delaying the overall gelation reaction.

It has been found according to the invention that this perfectly novel delaying method (in the prior art, and in particular in U.S. patent 3 926 258, it is on the contrary the reaction of the crosslinking agent with the polymer which is inhibited) could be performed with compounds which can be defined, very generally, as being part of the conventional chelating agents, such as for example, amino-poly-carboxylic acids, hydroxy-polycarboxylic acids, poly-phosphonic acids, and salts thereof.

The following compounds are cited by way of example and non-restrictively :

. ethylenediaminetetramethylenephosphonic acid;

. 1-hydroxyethylidene 1,1-diphosphonic acid (poly-phosphonate 3);

. aminotrimethylenephosphonic acid (polyphosphonate 1)

. diethylenetriaminepentamethylenephosphonic acid
(poly-phosphonate 2);

. Alkali metal and ammonium salts of these acids;

. E.D.T.A. (ethylenediaminetetracetic acid) and alkali
metal and ammonium salts thereof;

. diethylenetriaminepentacetic acid and alkali metal
and ammonium salts thereof;

. N-(hydroxyethylene)-diaminetriacetic acid (and
alkali metal and ammonium salts thereof);

. citric acid;

. NTA nitrilotriacetic acid.

Polyphosphonates are especially preferred in the case of the invention and are preferably used at concentrations of 5 ppm to 5000 ppm.

Nothing could really indicate that these agents could play a really efficient part as gelation delaying agents.

According to the invention, their operating mechanism is indeed different, as explained hereinabove, from a sequestering mechanism, (for example).

The applicant has discovered that these additives are capable of delaying gelation of hydrolysed polyacrylamides especially in the presence of dichromates and other precursors.

Suitable precursors of crosslinking agents according to the invention will be all compounds with high oxidation level and capable of producing crosslinking agents or species by reaction with a suitable reducing agent (activating agent).

Amongst these compounds :
- alkali metal or ammonium chromate
- alkali metal or ammonium dichromates, sodium dichromate being particularly preferred for economical reasons.

Suitable reducing agents (or activators) can be any substance capable of reacting with a suitable precursor to produce crosslinking species or agents whose reactions can be inhibited by at least one of the inhibitors discovered according to the invention and described hereinabove. Such reducing agents are preferably slowly-reacting weak reducing agents and include for example sulfites, phosphites, thiosulfates, thiocyanates, and organic thiones and thiols. The concentration of the reducing agent is selected so as to meet the requirements of gelation time and the appropriate reduction of the precursor. Preferably, concentration of the reducing agent can vary between 50 ppm and 15,000 ppm.

Suitable systems according to the invention include thiourea and its alkyl derivatives.

A gel forms when the reducing agent reacts with the precursor, this producing crosslinking agents which in turn react with the preionised polymer groups to form a very viscous gel.

It is possible, according to the invention, to introduce a delay in gelation by adding at least one inhibitor such as described hereinabove.

It should be noted on this point that the inhibitor/reducing agent couple is quite specific. Indeed, it is possible for an inhibitor of a certain reduction reaction not to inhibit another reduction reaction.

The concentration field of the inhibitor is also of crucial importance : above a certain value, there is simply no gelation.

Thus, a precise and predetermined gelation time will only be obtained if the above couple and the concentrations are correctly selected.

A man skilled in the art will know how to choose, from his own knowledge and from the indications contained in the present application, and if necessary by conducting a few known tests, those components which are best adapted of the inhibitor/reducing agent couple, as well as the concentrations which will lead to the required gelation time.

Polymers to which the invention is applicable include all the macromolecular species which can be crosslinked by multivalent metallic ions, in particular anionic polymers.

These include :

- carboxylic groups containing polymers (in free acid or acid salt form);
- polymers capable of forming carboxylic groups on dissolving;
- polymers containing sulfate anionic groups;
- polymers containing cis-hydroxy groups.

The following polymers are cited by way of example and non-restrictively :

- polyacrylates ;
- partially hydrolysed polyacrylamides;
- xanthan gum;
- carboxy polysaccharides, for example carboxymethylcellulose (CMC), carboxymethylhydroxyethylcellulose (CMHEC) and carboxymethyl guar gum;
- alginates;
- poly-(methyl- and oxide vinyl/maleic anhydride
- cis-hydroxy group containing polymers, for example polyvinylic alcohols and galactomannoses for example guar gum, "locust", "bean gum", etc;

- sulfate group containing polymers, for example carragheenanes.

These polymers further include, for example, synthetic terpolymers containing acrylic monomer moieties and sulfonic groups.

As indicated hereinabove, the agents according to the invention are capable of delaying the gelation of polymers containing for example carboxylic groups.

Another absolutely essential characteristic which has never been obtained in the prior art, resides in the possibility to control the gelation time, accurately.

This characteristic is of primary importance in that, when treating underground reservoirs, it is necessary not only to delay the gelation of polymer solutions, but also to obtain a precise control of the gelation time of these solutions. This is necessary in order to prevent both the formation of gel in the drilling well or in the pumping equipment on the surface (with the cleaning problems that this entails) if gelation occurs too rapidly, and having to stop for long periods the treatment of the wells if gelation occurs too late. Ideally, gelation should occur immediately after the injection of the entire solution of polymer fluid into the layer to be treated.

Despite the wellknown advantage of this characteristic, this could never be achieved in the prior art owing to the fact it was impossible to control the gelation time.

For the very first time, the systems according to the invention have afforded the possibility to control effectively, i.e. accurately, the gelation time, owing to a very simple parameter which is the pH.

For most petroleum applications, the gels are required to have four essential properties, which are :

1) to be usable at high temperature ;

2) to be compatible with the wide range of brines normally found on the oilfield ;

3) to have good thermal stability;

4) to have a gelation time which is accurately controllable.

The fourth condition raises a number of problems due to the fact that :

a) many of the reactions between reducing agents and precursors are acid catalysed and hence very sensitive to small variations in pH;

b) it is difficult to obtain an accurate equilibrium pH of a polymer solution in anything but strictly controlled laboratory conditions.

For the system to be useful on the oilfield and to have a predictable gel time, it is therefore necessary to have pH control through a buffer system, compatible with the other components.

There are no general limitations for choosing the buffer systems since these systems are only used to control the pH of the medium.

However, for a given chemical system, namely polymer, precursor, reducing agent, etc., selected so as to lead (depending also on the conditions of the temperature, water or brine used) to the required delay in gelation, the choice of the buffer system may be limited by the required pH and by the compatibility of the buffer components with the components of the chemical system.

Simple tests will enable any one skilled in the art to determine the best system for every particular case.

For example, a citric acid/sodium citrate buffer or an $NH_4^+$ chloride buffer, or a phosphate buffer, are not suitable for the contemplated application, because of the secondary reactions such as precipitations, complexations, etc.

Tests have shown that a sodium acetate/acetic acid buffer is more suitable according to the invention.

The present invention therefore relates preferably to systems with the following components :

Polymer : partially hydrolysed polyacrylamides Buffer : sodium acetate/acetic acid

Precursor : sodium dichromate

Reducing agent (activator) : thiourea and its N, N'-dialkyl derivatives

Inhibitors : polyphosphonic acids and their salts.

The invention enables, at a given temperature, to accurately control the delay in gelation for a polymer solution, by modifying the concentration of the polyphosphonate, or the pH, or the concentration of the reactants. the invention can be carried out over a very wide range of temperature, with fresh water, brines or sea water, to obtain delays in gelation which can vary between a few hours to a few weeks, the gelation time being also conrolled accurately.

The method according to the invention can be carried out at a temperature varying between the freezing point of the solution and the polymer decomposition temperature, more normally between $59^\circ$ F and $221^\circ$ F.

It will be noted that there is a minimum polymer concentration below which gelation does not occur. This is due to the fact that, in order to be crosslinked and to start gelling, the polymer chains concentration must be such that said chains can cover one another. The minimum concentration depends on the type of polymer, on its molecular weight and on the composition of the brine used as solvent.

There is no special maximum concentration other than the limit beyond which a phase separation (saturation phenomenon) occurs.

In general, a higher polymer concentration of the solution, will mean that the initial solution will be more viscous and that the final gel will be more consistant.

By way of example, it can be indicated that preferred polymer concentrations are advantageously between about 250 ppm and 25,000 ppm.

The buffer system concentration is not limited in any particular way. The concentration will be selected to allow suitable pH control of the system.

Concentrations in precursor/reducing agent/inhibitor :
these three components control the reaction speed.

The lower the precursor and reducing agent concentration is, the slower the reaction. However, below a certain concentration limit for either, no consistant gels can form because the quantity of crosslinking agents which forms becomes too small.

On the other hand, there is a possibility of reaction between these two components when the viscosity of the solution is increased, whatever their concentration. However, in certain applications, gels of low consistency may be preferable. Such gels also form part of the invention.

Thus, the concentrations of precursors and reducing agents will be chosen for each individual case, in order to obtain the required gelation time and gel consistency characteristics. When the precursor is sodium dichromate, it is particularly advantageous to use it in concentrations varying between 50 and 5,000 ppm.

Also, the higher the inhibitor concentration is, the greater the delay in gelation. There is however a maximum concentration limit beyond which no gelation is observed.

This concentration threshold is very low, which is surprising.

For example, for a system including:
- partially hydrolysed polyacrylamide       3,000 ppm
- thiourea                                  1,500 ppm
- sodium dichromate                           500 ppm
pH = 5.3
T = 158° F;

the maximum inhibitor concentration is 300 ppm when the inhibiting agent is polyphosphonate agent 1.

The following examples are given unrestrictedly to illustrate the invention. In these examples, the gelation time (Gt) is defined as the time necessary for the viscosity of the solution to go above 2,000 cP (100 reading units), using a BROOKFIELD viscometer (LV1 spindle, 3 tr/min.).

EXAMPLE 1.

The effect of a polyphosphonate inhibitor on the gelation time of polyacrylamides in the presence of a reducing agent and of sodium dichromate, has been studied.

The system used was :

- 3,000 ppm of partially hydrolysed polyacrylamide in a conventional brine at 3.0 % NaCl;
- 1,500 ppm of reducing agent
-   500 ppm of sodium dichromate;
- buffer solution of pH 5.3;
- temperature 167° F
- with or without 100 ppm of polyphosphonate 1.

The results obtained with different reducing agents are given in the following table :

| REDUCING AGENT | GELATION TIME (HOURS) | |
| --- | --- | --- |
| | Without polyphosphonate 1 | With 100 ppm polyphosphonate 1 |
| . Hydrazine | 0 | 0 |
| . Sodium bisulfite | <1 | <1 |
| . Sodium sulfite | <1 | ~2 |
| . Sodium thiosulfate | <1 | ~2.5 |
| . Thiourea | ~4 | ~27 |
| . Allylthiourea | ~4 | ~23 |
| . N, N'-dimethyl-thiourea | ~16 | ~96 |
| . N, N'-diethyl-thiourea | ~28 | ~160 |

The results contained in the above table show that the efficiency of the polyphosphonate inhibitor largely depends on a suitably chosen reducing agent.

EXAMPLE 2

A number of examples are given hereunder to illustrate the influence of certain parameters on gelation time.

1. Formulation:

- 3,000 ppm of polyacrylamide in a 3,0 % NaCl brine;
- 1,500 ppm of thiourea
-   500 ppm of dichromate
- buffer solution of pH : 5.3 ;
- T = 167$^{\circ}$ F;

Gelation time, Gt = 4 h

Effect of inhibitor concentration :

The inhibitor is the polyphosphonate 1 product .

2. Composition identical to formulation 1. above, but containing 100 ppm of polyphosphonate 1.
    Gt = 21 h.

3. Formulation 1. with 200 ppm of polyphosphonate 1
    Gt = 28 h

4. Formulation 1. with 300 ppm of polyphosphonate 1
    Gt = 35 h.

Effect of the temperature :

5. Formulation 2., above but at 122$^{\circ}$ F
    Gt = 117 h.

6. Formulation2., but at 194 ° F Gt = 5 h.

Effect of dichromate concentration :

7. Formulation 2., but with 250 ppm of dichromate instead of 500 ppm.

   Gt = 43 h.

Effect of different brines :

8. Formulation 2., but with sea water ASTM instead of a 3.0 % NaCl brine.

   Gt = 20 h.

9. Formulation 2., but with a typical field brine (Yuca field, Peru) instead of the 3.0 % NaCl brine.

   Gt = 21 h.

Effect of the inhibitor type :

10. Formulation 3., but replacing the polyphosphonate 1 product by the polyphosphonate 2 product.

   Gt = 41 h.

11. Formulation 3., but replacing polyphosphonate 1 product by the polyphosphonate 3 product.

   Gt = 48 h.

12. Formulation 3., but replacing the polyphosphonate 1 product by EDTA.

   Gt = 36 h.

Effect of the pH :

13. Formulation 2., but with pH buffered at 4.8 instead of 5.3.

   Gt = 14 h.

14. Formulation 2., but with pH buffered at 5.8 instead of 5.3.

Gt = 69 h.

Use with different polymer systems :

15. Formulation :

- 2,500 ppm of xanthane gum ("Xanflood XFL - Kelco") in 3.0 % NaCl ;
- 1,500 ppm of thiourea ;
-     500 ppm of dichromate ;
- pH = 5.3 ;
- T = 158 $^{\circ}$ F;
- Gt = 5 h

16. Formulation 15., but with in addition, 200 ppm of polyphosphonate 1 product.

Gt = 32 h.

17. An acrylic terpolymer containing sulfonic acid groups and carboxylic acid groups.

Formulation :

- 3,000 ppm of this terpolymer in 3.0 % NaCl ;
- 1,500 ppm of thiourea ;
-     500 ppm of dichromate ;
- pH = 5.3 ;
- T = 158 $^{\circ}$ F ;
- Gt = 5 h.

18. Formulation 17., but with in addition 200 ppm of phosphonate 1 product.

Gt = 30 h.

Use of other polymers

19. Formulation :
- 5000 ppm of guar gum in sea water
- 1500 ppm of thiourea
-  500 ppm of sodium dichromate
pH = 5.3     T = 158° F      Gelation time = 8 h.
20. Formulation
- 5000 ppm carragheenane (iota) in distilled water
- 1500 ppm of thiourea
-  500 ppm of sodium dichromate
pH = 5.3     t = 158 ° F     Gelation time 6h30 min.


EXAMPLES 3 to 6 :

        The following tests were conducted
at 185° F using 1,500 ppm of partially hydrolysed
polyacrylamide in sea water and one of the following
systems.

        Gelation time was measured for each
system, and it was found that long gelation times can
be obtained with the method according to the
invention.

| EXAMPLES | EXAMPLE 3 | EXAMPLE 4 | EXAMPLE 5 | EXAMPLE 6 |
|---|---|---|---|---|
| Reducing agent | Thiourea | Thiourea | Thiourea | Dimethyl-thiourea |
| | 1500 ppm | 1000 ppm | 500 ppm | 500 ppm |
| Na dichromate | 500 ppm | 500 ppm | 250 ppm | 500 ppm |
| Polyphosphonate 1 | 300 ppm | 200 ppm | 200 ppm | 300 ppm |
| Buffer solution at | pH 5.93 | pH 5.70 | pH 5.90 | pH 5.70 |
| Gelation time | 6 days | 7 days | 14 days | 15 days |

## CLAIMS

1.          Method for delaying gelation of aqueous polymer solutions capable of interacting with a precursor/activator crosslinking system to form a polymer gel, characterised in that it consists in controllably inhibiting by an inhibitor the reaction between the crosslinking agent precursor and the activator.

2.          Method as claimed in claim 1 wherein the inhibitor is selected amongst the amino-polycarboxylic acids, hydroxypolycarboxylic acids, polyphosphonic acids and their salts.

3.          Method as claimed in claim 2, wherein the inhibitor is aminotrimethylenephosphonic acid or diethylenetriaminepentamethylenephosphonic acid.

4.          Method as claimed in any one of claims 1 to 3, wherein the polymer contains anionic groups, in particular carboxylic groups, or groups capable of releasing carboxy groups by hydrolysis, or cis-hydroxy or sulfate groups.

5.          Method as claimed in claim 4, wherein the polymer is polyacrylate, a partially hydrolysed polyacrylamide, a carboxylpolysaccharide or a xanthane gum, a polyvinylic alcohol a galactomannose or an alginate.

6.          Method as claimed in any one of claims 1 to 5, wherein the crosslinking agent precursor is selected amongst the chromates and dichromates of ammonium or alkali metals.

7.          Method as claimed in any one of claims 1 to 6, wherein the activator is selected amongst the reducing agents, sulfites, phosphites, thiosulfates, thiocyanates.

21                                    **0142407**

8.        Method as claimed in any one of claims 1 to 6, wherein the activator is selected amongst organic thiones and thiols.

9.        Method as claimed in any one of claims 1 to 8, wherein the polymer concentration is between 250 ppm and 25,000 ppm, the inhibitor is a polyphosphonate of 5 to 5000 ppm concentration, and the crosslinking system includes sodium dichromate of 50 to 5,000 ppm concentration and an activator of 50 to 15,000 ppm concentration.

10.        Method as claimed in any one of claims 1 to 9, wherein the pH of the aqueous polymer solution is controlled by a compatible buffer system.

11.        Method as claimed in any one of claims 1 to 10, wherein the aqueous polymer solution is buffered with a sodium acetate/acetic acid buffer.

12.        Method as claimed in any one of claims 1 to 11, wherein the reaction system is as follows :

- 3 000 ppm of partially hydrolysed polyacrylamide in a 3.0 % NaCl brine
- 1 500 ppm of reducing agent
-    500 ppm of sodium dichromate
- buffer for pH 5.3
- temperature 167$^{\circ}$ F
- aminotrimethylenephosphonic acid (polyphosphonate 1) 100 ppm
- consistency >2 000 cP.

| Activator | Gelation time : |
|---|---|
| Na sulfite | ~ 2 h |
| Na thiosulfate | ~ 2.5 |
| thiourea | ~ 27 |
| allylthiourea | ~ 23 |
| N, N'-dimethylthiourea | ~ 96 |
| N, N'-diethylthiourea | ~ 160 |

13. Method as claimed in any one of claims 1 to 11, wherein the reaction system is as follows :

| Polymer | Dichromate | Activator | Inhibitor | oT (°F) | pH | Gelation time(hr.) |
|---|---|---|---|---|---|---|
| Polyacrylamide 3 000 ppm/ 3.0 % NaCl brine | 500 ppm | thiourea 1500 ppm | 0 | 167 | 5.3 | 4 |
| " | " | " | polyphos phonate 1 100/200/300 ppm | " | " | 21/28/35 |
| " | " | " | 100 ppm polyphos phonate 1 | 122/194 | " | 117/5 |
| " | 250 ppm | " | polyphos phonate 1 100 ppm | 167 | " | 43 |
| " | 500 ppm | " | polyphos phonate 1 100 ppm | 167 | 4.8 5.8 | 14 69 |
| " Standard sea water | 500 ppm | " | polyphos phonate 1 100 ppm | 167 | 5.3 | 20 |
| " Yuca brine | " | " | " | " | " | 21 |
| polyacrylamide 3000 ppm 3.0% NaCl brine | " | " | polyphos phonate No.3/EDTA 200ppm | " | " | 48/36 |

0142407

14.          Aqueous polymer solution of
delayed gelation obtained with the method according to
any one of claims 1 to 13.

15.          Use of the solutions such as
claimed in claim 14 to reduce permeability of drilled
subterranean oil formations.

## 0142407

### European Patent Office

## EUROPEAN SEARCH REPORT

Application number

EP 84 40 2021

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl 4) |
| D,X | US-A-3 926 258 (J.E. HESSERT et al.)<br><br>* Claims 1-8; column 5, lines 49-65; column 6, lines 51-65; column 7, lines 29-45; column 8, lines 14-17 * | 1,2,4-7,14,15 | C 09 K 7/02<br>E 21 B 33/138<br>E 21 B 21/00 |
| A | US-A-4 110 230 (J.E. HESSERT et al.)<br>* Claim 1 * | 1 | |
| A | US-A-4 210 206 (J.W. ELY et al.)<br>* Claims 1-3 * | 10 | |
| | | | TECHNICAL FIELDS SEARCHED (Int. Cl.4) |
| | | | C 09 K<br>E 21 B |

The present search report has been drawn up for all claims

| Place of search | Date of completion of the search | Examiner |
|---|---|---|
| THE HAGUE | 24-01-1985 | HALLEMEESCH A.D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82